# FASCICULE DE BREVET EUROPEEN

(11) **EP 1 494 881 B1**
(45) Date de publication et mention de la délivrance du brevet: **14.06.2006**
(21) Numéro de dépôt: 03746329.6
(22) Date de dépôt: 09.04.2003
(51) Int. Cl.: B60H 3/06

(54) **DISPOSITIF DE PURIFICATION D AIR A STRUCTURE SEPARABLE**
LUFTREINIGUNGSVORRICHTUNG MIT EINER ABTRENNBAREN KONSTRUKTION
AIR PURIFICATION DEVICE WITH DETACHABLE STRUCTURE

(30) Priorité: 12.04.2002 FR 0204648
(43) Date de publication de la demande: 12.01.2005
(73) Titulaire: VALEO SYSTEMES THERMIQUES, 78320 Le Mesnil Saint-Denis (FR)
(72) Inventeur: PAUMIER, Carine, F-78000 Versailles (FR); FEUILLARD, Vincent, F-78320 Le Mesnil Saint Denis (FR); LADRECH, Frédéric, F-78310 Maurepas (FR)
(86) Numéro de dépôt international: PCT/FR2003/001127
(87) Numéro de publication internationale: WO 2003/086793

(56) Documents cités:
- EP-A- 0 960 644
- WO-A-96/37281
- FR-A- 2 795 656

## Description

### Arrière-plan de l'invention

La présente invention concerne le traitement des polluants présents dans l'air de l'habitacle d'un véhicule automobile.

Actuellement, les installations de chauffage et/ou climatisation des véhicules automobiles comportent des filtres destinés à éliminer les polluants susceptibles d'être introduits dans l'habitacle. Ces filtres sont essentiellement de deux types :les filtres à particules et les filtres à gaz.

Les filtres à particules comportent une surface active faite d'un revêtement en fibres non tissées monté dans un cadre rigide, par exemple en matière plastique. Un tel filtre conforme au préambule de la première revendication, est divulgué dans le document FR 2 795 656. La durée de vie d'un tel filtre à particules dans un véhicule automobile est d'environ 20 000 km.

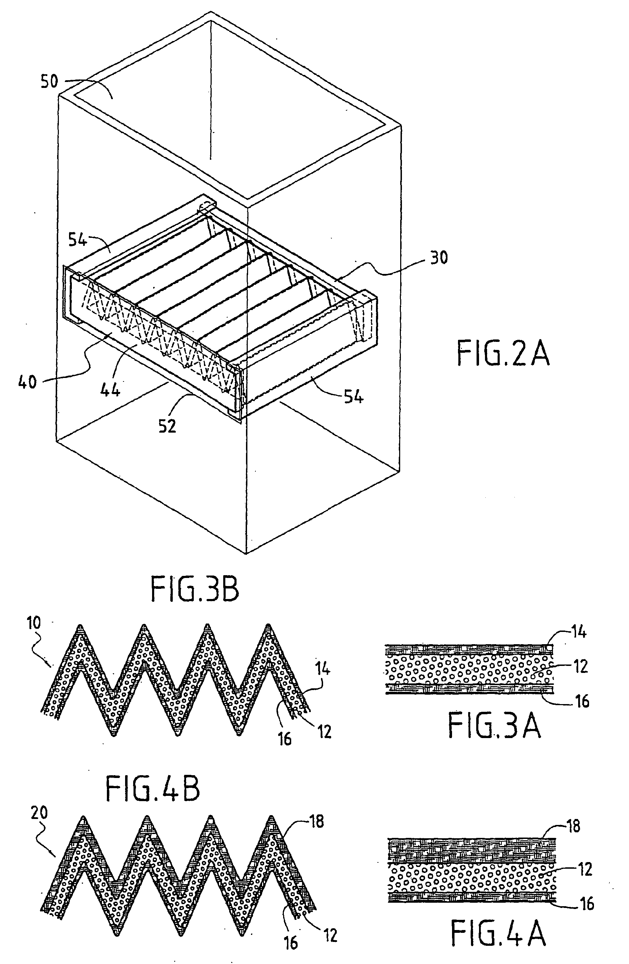

Les filtres à gaz 10, comme l'illustrent les figures 3A et 3B, comportent une surface active 12 formée de charbon actif ou tout autre adsorbant et disposée, pour des raisons de maintien mécanique, entre deux couches 14, 16 d'un revêtement en fibres non tissées. L'ensemble de ces trois couches, plissé en accordéon pour faire apparaître des ondulations ou plis en forme de V, afin d'augmenter la surface utile du filtre et diminuer la perte de charge, est monté également dans un cadre rigide. La durée de vie d'un tel filtre à gaz est aussi d'environ 20 000 km.

Ces deux types de filtres ayant recours aux mêmes matériaux non tissés et présentant une durée de vie identique, il a été proposé; comme l'illustrent les figures 4A et 4B, de les assembler en une structure unique 20 appelée filtre « combiné ». Dans cette structure, la première couche de revêtement 18 forme un filtre à particules destiné à filtrer les particules présentes dans le flux d'air à purifier, cette purification étant réalisée par la couche suivante de charbon actif 12 (la troisième et dernière couche 16 assurant comme précédemment une fonction de maintien). Bien entendu, pour permettre un fonctionnement adéquat, le filtre doit être disposé de façon que la première couche 18 soit en amont de la troisième 16 par rapport au flux d'air.

Or, la demanderesse, avec une demande de brevet déposée le même jour, a proposé de remplacer les filtres à gaz traditionnels au charbon actif par des filtres à gaz d'un type nouveau comportant une couche centrale de purification utilisant le principe de la photocatalyse et dont la durée de vie est beaucoup plus importante, typiquement 100000km et plus, que celle des filtres traditionnels.

Dès lors, la différence de durée de vie entre la couche externe de filtration des particules et cette couche centrale de purification (dans un rapport de 1 à 5) dans de tels filtres combinés pose problème, car elle implique la mise au rebut du composant en son entier alors que sa couche centrale de purification, dont le coût est le plus élevé, est encore active.

Une solution simple pourrait consister à séparer le filtre à particules du filtre à gaz et à placer ceux-ci dans deux cadres supports distincts. Malheureusement, une telle solution à deux filtres séparés est difficilement envisageable car l'espace disponible dans une installation de chauffage et/ou climatisation est très limité. En outre, la présence de deux filtres rendrait plus complexe les opérations de maintenance et ne permettrait pas un remplacement un pour un (retrofit) des filtres combinés actuels.

### Objet et résumé de l'invention

L'invention a donc pour objet un dispositif de purification de l'air particulièrement adapté au remplacement des filtres combinés classiques par des filtres de type photocatalytique et garantissant une utilisation optimale de la couche centrale de purification de ces filtres. Un but de l'invention est aussi de réaliser un dispositif de purification d'air permettant une maintenance aisée.

Ces buts sont atteints grâce à un dispositif de purification de l'air de l'habitacle d'un véhicule comportant un filtre à particules comprenant une couche de revêtement en fibres non tissées, plissée en accordéon pour faire apparaître des ondulations, et un filtre à gaz comprenant une première couche de revêtement en fibres non tissées, une deuxième couche de purification de l'air recouvrant la première couche et constituée d'un agent photocatalyseur intimement associé à des grains d'un adsorbant, et une troisième couche de revêtement en fibres non tissées recouvrant la seconde couche, l'ensemble de ces trois couches étant plissé en accordéon pour faire apparaître des ondulations, dispositif dans lequel le filtre à particules et le filtre à gaz présentent des ondulations de même pas se superposant exactement, de façon à permettre un emboîtement des deux filtres l'un dans l'autre pour former une structure commune.

L'invention est remarquable en ce qu'ainsi la partie de filtre à particules peut être remplacée simplement une fois colmatée, sans avoir à intervenir sur la partie de filtre à gaz qui n'est pas touchée jusqu'à ce qu'elle soit remplacée à son tour.

L'adsorbant est de préférence du charbon actif, de la zéolite ou un mélange des deux et l'agent photocatalyseur de l'oxyde de titane.

L'invention concerne également une installation de climatisation de l'habitacle d'un véhicule automobile comprenant un groupe moto-ventilateur délivrant un flux d'air dans un conduit de distribution d'air dans lequel est disposé le dispositif de purification d'air précité.

De préférence, le conduit de distribution d'air comporte une ouverture au travers de laquelle est introduit le dispositif de purification d'air et cette ouverture du conduit de distribution d'air peut être fermée par une trappe une fois le dispositif de purification d'air mis en place dans le conduit. Toutefois, le cadre support du filtre à particules peut aussi constituer cette trappe de fermeture du conduit de distribution d'air.

### Brève description des dessins

D'autres particularités et avantages du dispositif selon l'invention ressortiront à la lecture de la description faite ci-après, à titre indicatif mais non limitatif, en référence aux dessins annexés sur lesquels :
- la figure 1 illustre un premier exemple de réalisation d'un dispositif de purification de l'air selon l'invention ;
- la figure 1A est une vue en coupe transversale du dispositif de purification de l'air de la figure 1 ;
- la figure 2 illustre un second exemple de réalisation d'un dispositif de purification de l'air selon l'invention ;
- la figure 2A est une vue en perspective du dispositif de purification de l'air de la figure 2 une fois assemblé ;
- les figures 3A et 3B sont des vues partielles illustrant les différentes couches d'un filtre à charbon actif de l'art antérieur ;
- les figures 4A et 4B sont des vues partielles illustrant les différentes couches d'un filtre combiné de l'art antérieur,
- la figure 5 montre une variante du support maintenant le média de la seconde partie du dispositif, et
- la figure 6 illustre la relation entre l'écartement des premiere et seconde parties avec la perte de charge du dispositif.

### Description détaillée des modes de réalisation

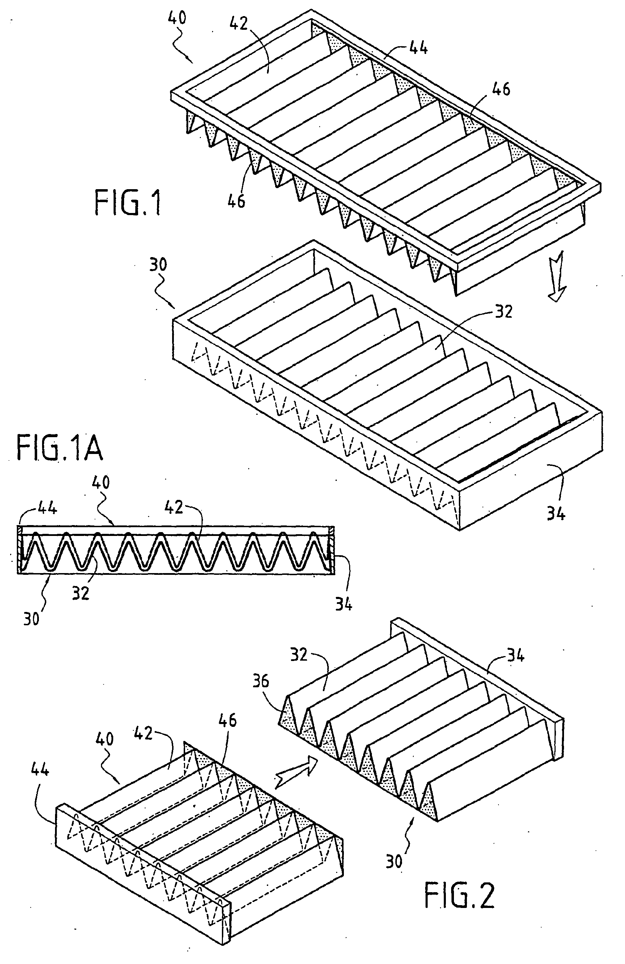

La figure 1 illustre en vue éclatée un premier exemple de réalisation d'un dispositif de purification de l'air selon l'invention destiné à être monté dans un conduit de distribution d'air d'une installation de climatisation d'un habitacle de véhicule automobile comportant un groupe moto-ventilateur délivrant ce flux d'air.

Selon l'invention, ce dispositif est formé en deux parties séparables qui s'emboîtent l'une dans l'autre (voir la figure 1A) pour former une structure commune, une première partie 30 formant filtre à gaz de type photocatalytique, comme décrit dans la demande déposée le même jour sous le numéro d'enregistrement français 02 04647 et intitulée «Purification de l'air de l'habitacle d'un véhicule automobile par adsorption et photocatalyse», et une seconde partie 40 formant filtre à particules. Bien entendu, pour permettre un fonctionnement adéquat, le dispositif doit être disposé dans le conduit de façon que la seconde partie 40 soit en amont de la première partie 30 par rapport au flux d'air.

Le filtre à gaz comporte une structure à trois couches avec une première couche de revêtement en fibres non tissées, une deuxième couche de purification de l'air recouvrant la première couche et constituée d'un agent photocatalyseur intimement associé à des grains d'un adsorbant, et une troisième couche de revêtement en fibres non tissées recouvrant la deuxième couche, le média 32 formant l'ensemble de ces trois couches étant plissé en accordéon pour faire apparaître des ondulations ou plis en forme de V et de pas p.

Les couches de revêtement peuvent être en base PP, PA, PET ou PTFE. A titre d'exemple, l'épaisseur d'une couche de revêtement est comprise entre 0,1 et 2 mm.

Ce média est monté dans un cadre support rectangulaire 34 comportant deux cotés longitudinaux et éventuellement deux cotés transversaux et réalisé par exemple en mousse ou en matière plastique rigide ou bien encore avantageusement en fibres non tissées de la même matière que les première et troisième couches du média. La mise en place du média dans le cadre est de préférence faite par soudage miroir ou collage à chaud (hot-melt process) ou surmoulage.

Avec cette structure de type photocatalytique, l'adsorbant adsorbe les polluants instantanément en les piégeant dans ses pores sans les détruire. Ensuite, l'agent photocatalyseur désorbe les molécules du polluant piégées sur la surface de l'adsorbant en les détruisant grâce à des réactions d'oxydation réduction. Cela permet de régénérer l'adsorbant et par conséquent d'augmenter la durée de vie d'un tel filtre de l'ordre de 4 à 5 fois celle d'un filtre classique à charbon actif, voire même atteindre celle du véhicule. Dans le cas où ces réactions chimiques ne sont pas complètes, les sous-produits seront piégés par l'adsorbant et seront décomposés ultérieurement par l'agent photocatalyseur.

L'agent photocatalyseur est avantageusement de l'oxyde de titane (TI02) principalement de forme anatase ou tout autre oxyde métallique ayant la propriété de photo catalyse qui détruit les molécules de gaz polluant grâce à des réactions chimiques d'oxydation réduction sous l'effet d'un rayonnement UV produit par une source lumineuse (non représentée) mais qui est avantageusement intégrée au support cadre de ce filtre ou directement dans le conduit de distribution d'air, comme décrit dans la demande précitée), et l'adsorbant est de préférence du charbon actif, de la zéolite ou un mélange des deux.

Le filtre à particules est une structure comportant un média formé d'au moins une couche d'un revêtement de fibres non tissées 42 plissé en accordéon pour faire apparaître des ondulations ou plis en forme de V et d'un pas p correspondant à celui du filtre à gaz de sorte que ces ondulations peuvent être superposées exactement (voir la figure 1A où pour la commodité du dessin les deux filtres ne sont pas exactement superposés). Ce média est solidaire d'un cadre support rectangulaire 44 qui est avantageusement réalisé en fibres non tissées de la même matière que le filtre à particules ou encore en mousse ou en matière plastique rigide à base PP, PA, PET ou PTFE par exemple, et sa mise en place dans le cadre est, comme précédemment, de préférence faite par soudage miroir ou collage à chaud (hot-melt process) ou surmoulage.

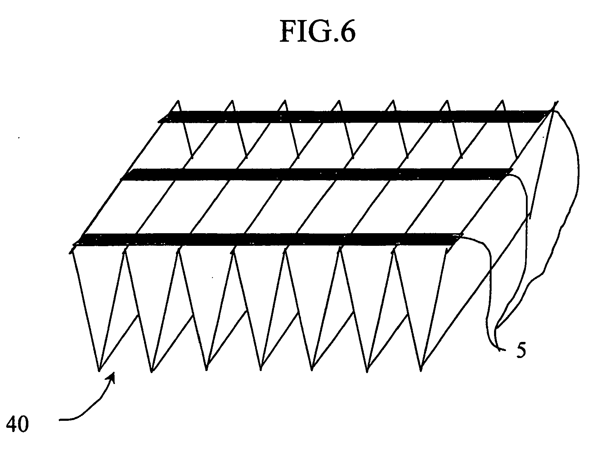

La figures 6 illustre une variante du cadre du filtre à particules 40. Cette figure montre un moyen particulièrement économique pour maintenir le pas p du média constituant le filtre à particules. En effet, ce maintien est obtenu au moyen de filets de colle 5 reliant les crêtes d'un coté du média. L'épaisseur supplémentaire ainsi ajoutée à l'épaisseur de la première partie 30 quand les deux parties sont emboîtées l'une dans l'autre n'est donc que d'environ 2 mm.

Dans le premier exemple de réalisation, l'assemblage du dispositif de purification d'air se fait donc très simplement (les ondulations ayant même pas) en emboîtant le filtre à particules 40 sur le filtre à gaz 30, jusqu'à ce que leurs cadres viennent en contact (le maintien de la pression de contact entre les deux filtres est assuré par exemple par des clips ou agrafes (non représentés)). L'emboîtement est facilité en munissant les cotés longitudinaux du média 42 de parois de maintien 46 correspondant aux ondulations (et donc en forme de dents de scie).

Cette structure en deux parties séparables est particulièrement intéressante au niveau de la maintenance puisque, lorsque le filtre à particules est colmaté, il suffit de séparer les deux filtres et de remplacer le filtre à particules par un neuf qui sera ensuite emboîté sur le filtre à gaz d'origine, cette séparation pouvant être effectuée directement dans le conduit de distribution d'air ou à l'extérieur selon l'espace disponible pour ce démontage/remontage. Cette opération peut être renouvelée plusieurs fois (en pratique jusqu'à 5 fois) jusqu'à ce que le filtre à gaz soit colmaté à son tour et nécessite donc d'être lui aussi remplacé.

On notera que l'efficacité du filtre à particules peut être améliorée en disposant en amont par rapport au flux d'air un ioniseur (non représenté) destiné à faciliter la filtration des petites particules (< 0,5 microns), les particules étant ainsi ionisées avant d'être collectées par le filtre.

Un second exemple de réalisation du dispositif de purification d'air selon l'invention est illustré en vue éclatée à la figure 2. Dans cette configuration, c'est le média 42 qui est réalisé conjointement avec son cadre support 44, par exemple par surmoulage, soudage miroir ou procédé de collage à chaud, le filtre à particules en forme de tiroir ainsi constitué 40 étant ensuite emboîté dans le filtre à gaz 30 formé d'un cadre support identique 34 sur lequel est monté le média correspondant 32. Idéalement, la symétrie des formes peut permettre de réaliser les deux filtres à partir d'un même moule. En outre, pour permettre un emboîtement parfait du média lors du montage (notamment le maintien du pas des ondulations), les cotés opposés au cadre support 34, 44 sont munis de parois de maintien 36, 46 aux formes (en dents de scie) complémentaires.

La figure 2A montre le dispositif de purification d'air de la figure 2 une fois mis en place dans un conduit de distribution d'air 50. Ce conduit est muni d'une ouverture 52 et de glissières 54 disposées dans le conduit et destinées à recevoir le dispositif qui peut ainsi être introduit entre elles à la manière d'un tiroir, le cadre support 44 du filtre à particules 40 venant fermer l'ouverture 52 du conduit à la manière d'une trappe (le maintien dans le conduit est assuré par exemple par des clips ou agrafes (non représentés)). Cette ouverture peut aussi être fermée par une trappe indépendante (non représentée). Avec cette configuration de montage, lors des opérations de maintenance, le retrait du filtre à particules seul est particulièrement aisé, le filtre à gaz restant en position sur ses glissières dans le conduit.

A titre d'exemple, le pas p de plissage peut être compris entre 7 et 12 mm. L'épaisseur de la première partie 30 formant filtre à gaz de type photocatalytique peut être comprise entre 20 et 30 mm alors que l'épaisseur de la seconde partie 40 formant filtre à particules peut être comprise entre 25 et 35 mm. La combinaison de ces fourchettes de valeur permet d'obtenir un dispositif de purification ayant une perte de charge comprise entre 100 et 180 Pascals.

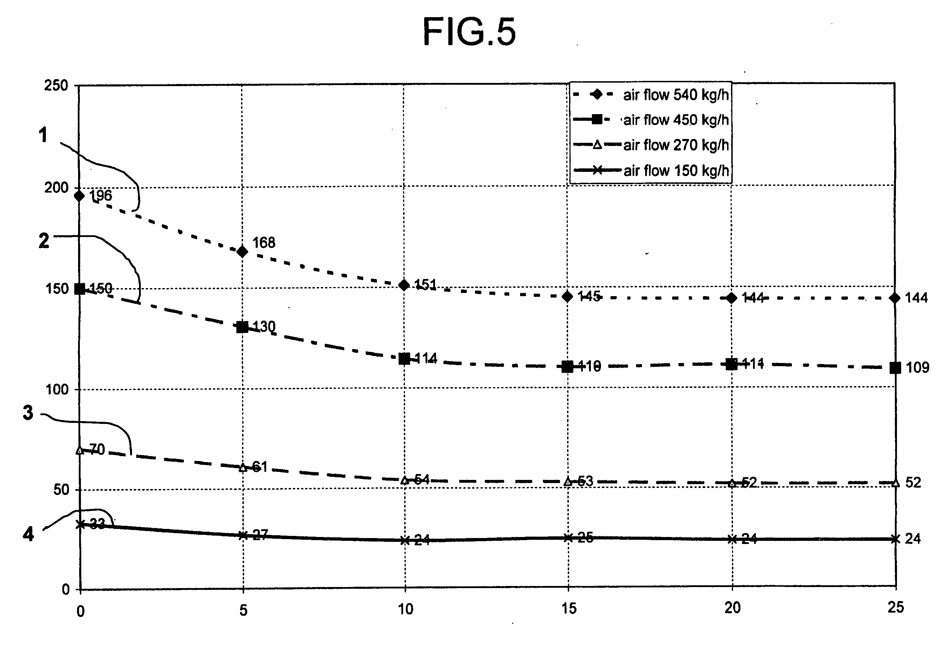

Cette perte de charge peut être réduite en écartant la première partie 30 de la deuxième partie 40 d'une valeur comprise entre 5 et 15 mm, le meilleur compromis perte de charge-packaging étant à la valeur 10 mm. La figure 5 illustre ce compromis. Les courbes 1, 2, 3 et 4 respectivement en petit pointillé, en trait interrompu, en grand pointillé et en trait plein montrent la perte de charge du dispositif de purification pour un débit du flux d'air respectivement d'environ 540 kg/h, 450 kg/h, 270 kg/h et 150 kg/h. Cette figure met en valeur le compromis d'écartement de 10 mm au-delà duquel le gain en perte de charge n'est plus significatif.

## Revendications

1. Dispositif de purification de l'air de l'habitacle d'un véhicule comportant un filtre à particules (40) comprenant une couche de revêtement en fibres non tissées, plissée en accordéon pour faire apparaître des ondulations, **caractérisé en ce que** le dispositif comporte un filtre à gaz (30) comprenant une première couche de revêtement en fibres non tissées, une deuxième couche de purification de l'air recouvrant la première couche et constituée d'un agent photocatalyseur intimement associé à des grains d'un adsorbant, et une troisième couche de revêtement en fibres non tissées recouvrant la seconde couche, l'ensemble de ces trois couches étant plissé en accordéon pour faire apparaître des ondulations, dispositif dans lequel le filtre à particules et le filtre à gaz présentent des ondulations de même pas se superposant exactement, de façon à permettre un emboîtement des deux filtres l'un dans l'autre pour former une structure commune.

2. Dispositif de purification d'air selon la revendication 1, **caractérisé en ce que** l'adsorbant est du charbon actif, de la zéolite ou un mélange des deux.

3. Dispositif de purification d'air selon la revendication 1, **caractérisé en ce que** l'agent photocatalyseur est de l'oxyde de titane.

4. Dispositif de purification selon l'une quelconque des revendications 1 à 3, **caractérisée en ce que** le pas du filtre à particules est maintenu au moyen d'un cadre support (44).

5. Dispositif de purification selon l'une quelconque des revendications 1 à 3, **caractérisée en ce que** le pas du filtre à particules est maintenu à l'aide d'au moins un filet de colle (5) reliant les crêtes des ondulations du filtre.

6. Dispositif de purification selon l'une quelconque des revendications précédentes, **caractérisée en ce que** le pas des ondulations est compris entre 7 et 12 mm.

7. Dispositif de purification selon l'une quelconque des revendications précédentes, **caractérisée en ce que** l'épaisseur du filtre à gaz (30) est comprise entre 25 et 35 mm et l'épaisseur du filtre à particules (40) est comprise entre 20 et 30 mm.

8. Dispositif de purification selon l'une quelconque des revendications 1 à 7, **caractérisée en ce que** la perte de charge dudit dispositif est améliorée en écartant le filtre à particules (40) du filtre à gaz (30) d'une valeur comprise entre 5 et 15 mm.

9. Installation de climatisation de l'habitacle d'un véhicule automobile comprenant un groupe moto-ventilateur délivrant un flux d'air dans un conduit de distribution d'air (50) dans lequel est disposé un dispositif de purification d'air selon l'une quelconque des revendications 1 à 8.

10. Installation de climatisation selon la revendication 9, **caractérisée en ce que** le conduit de distribution d'air comporte une ouverture (52) au travers de laquelle est introduit le dispositif de purification d'air.

11. Installation de climatisation selon la revendication 10, **caractérisée en ce que** l'ouverture du conduit de distribution d'air est fermée par une trappe une fois le dispositif de purification d'air mis en place dans le conduit.

12. Installation de climatisation selon la revendication 10, **caractérisée en ce que** le cadre support (44) du filtre à particules vient fermer l'ouverture du conduit de distribution d'air une fois le dispositif de purification d'air mis en place dans le conduit.

13. Installation de climatisation selon la revendication 9, **caractérisée en ce qu'**elle comporte en outre un ioniseur disposé en amont dudit dispositif de purification d'air par rapport au flux d'air.

## Claims

1. Air purification device for the passenger compartment of a vehicle comprising a particle filter (40) comprising a coating layer made of non-woven fibres, pleated in accordion fashion to create waves, **characterised in that** the device comprises a gas filter (30) comprising a first coating layer made of non-woven fibres, a second air purification layer covering the first layer and composed of a photocatalyst agent intimately associated with grains of an adsorbent, and a third coating layer made of non-woven fibres covering the second layer, all of these three layers being pleated in accordion fashion to create waves, device in which the particle filter and the gas filter have waves at the same pitch and superposing each other precisely, so that the two filters can nest into each other to form a common structure.

2. Air purification device according to claim 1, **characterised in that** the adsorbent is active carbon, zeolite or a mixture of the two.

3. Air purification device according to claim 1, **characterised in that** the photocatalyst agent is titanium oxide.

4. Purification device according to any one of claims 1 to 3, **characterised in that** the pitch of the particle filter is kept constant using a support frame (44).

5. Purification device according to any one of claims 1 to 3, **characterised in that** the pitch of the particle filter is kept constant using at least a glue strip (5) connecting the peaks of the filter waves.

6. Purification device according to any one of the previous claims, **characterised in that** the pitch of the waves is between 7 and 12 mm.

7. Purification device according to any one of the previous claims, **characterised in that** the thickness of the gas filter (30) is between 25 and 35 mm and the thickness of the particle filter (40) is between 20 and 30 mm.

8. Purification device according to any one of claims 1 to 7, **characterised in that** the pressure drop across the said device is improved by separating the particle filter (40) and the gas filter (30) by a distance of between 5 and 15 mm.

9. Air conditioning installation for the passenger compartment of an automobile vehicle comprising an electric blower outputting an airflow in an air distribution duct (50) in which there is an air purification device according to any one of claims 1 to 8.

10. Air conditioning installation according to claim 9, **characterised in that** the air distribution duct comprises an opening (52) through which the air purification device is inserted.

11. Air conditioning installation according to claim 10, **characterised in that** the opening in the air distribution duct is closed by a door once the air purification device has been put into place in the duct.

12. Air conditioning installation according to claim 10, **characterised in that** the support frame (44) of the particle filter closes the opening in the air distribution duct once the air purification device has been put into place in the duct.

13. Air conditioning installation according to claim 9, **characterised in that** it also comprises an ioniser placed on the air inlet side of the said air purification device, with respect to the airflow.

## Patentansprüche

1. Luftreiniger für das Fahrerhaus eines Fahrzeugs, mit einem Reinluftfilter (40), der eine Überzugsschicht aus ungewebten Fasern umfasst, die als Ziehharmonika gefaltet ist, um Wellenbewegungen sichtbar zu machen, **dadurch gekennzeichnet, dass** der Luftreiniger einen Gasfilter (30)umfasst, der aus einer ersten Überzugsschicht aus ungewebten Fasern besteht, einer zweiten Luftreinigungsschicht, welche die erste Schicht bedeckt und aus einem Photokatalysatormittel besteht, das eng mit den Körnern eines Sorptionsmittel verbunden ist und eine dritte Überzugsschicht aus ungewebten Fasern, welche die zweite Schicht bedeckt, wobei alle diese drei Schichten als Ziehharmonika gefaltet sind, um Wellenbewegungen sichtbar zu machen, eine Vorrichtung, bei der der Reinluftfilter und der Gasfilter Wellenbewegungen mit der gleichen Teilung aufweisen, die sich genau überlagern und zwar so, dass ermöglicht wird, der eine Filter sich in den anderen einfügt, um eine gemeinsame Struktur zu bilden.

2. Luftreiniger gemäß Anspruch 1, **dadurch gekennzeichnet, dass** das Sorptionsmittel aus Aktivkohle, Zeolith oder einer Mischung aus beiden besteht.

3. Luftreiniger gemäß Anspruch 1, **dadurch gekennzeichnet, dass** das Photokatalysatormittel aus Titandioxyd besteht.

4. Luftreiniger gemäß einem der Ansprüche 1 bis 3, **dadurch gekennzeichnet, dass** die Teilung des Reinluftfilters mit Hilfe eines Trägerrahmens (44) gehalten wird.

5. Luftreiniger gemäß einem der Ansprüche 1 bis 3, **dadurch gekennzeichnet, dass** die Teilung des Reinluftfilters mit Hilfe von mindestens einem Klebernetz (5) gehalten wird, das die Wellenberge der Wellenbewegungen des Filters verbindet.

6. Luftreiniger gemäß einem der vorherigen Ansprüche, **dadurch gekennzeichnet, dass** die Teilung der Wellenbewegungen zwischen 7 und 12 mm liegt.

7. Luftreiniger gemäß einem der vorherigen Ansprüche, **dadurch gekennzeichnet, dass** die Dicke des Gasfilters (30) zwischen 25 und 35 mm liegt und die Dicke des Reinluftfilters (40) zwischen 20 und 30 mm.

8. Luftreiniger gemäß einem der Ansprüche 1 bis 7, **dadurch gekennzeichnet, dass** der Druckverlust des besagten Luftreinigers verbessert wird durch die Entfernung des Reinluftfilters (40) von dem Gasfilter (30) um einen Wert zwischen 5 und 15 mm.

9. Klimaanlage des Fahrerhauses eines Kraftfahrzeugs, die ein Maschinen-Lüfteraggregat umfasst, das einen Luftstrom in einer Verteilungsleitung (50) abgibt, in der ein Luftreiniger gemäß einem der Ansprüche 1 bis 8 angeordnet ist.

10. Klimaanlage gemäß Anspruch 9, **dadurch gekennzeichnet, dass** die Luftverteilungsleitung eine Öffnung (52) umfasst, durch die der Luftreiniger eingeführt wird.

11. Klimaanlage gemäß Anspruch 10, **dadurch gekennzeichnet, dass** die Öffnung der Luftverteilungsleitung von einer Klappe verschlossen wird, sobald der Luftreiniger in der Leitung eingebaut wurde.

12. Klimaanlage gemäß Anspruch 10, **dadurch gekennzeichnet, dass** der Trägerrahmen (44) des Reinluftfilters die Öffnung der Luftverteilungsleitung schließen wird, sobald der Luftreiniger in der Leitung eingebaut wurde.

13. Klimaanlage gemäß Anspruch 9, **dadurch gekennzeichnet, dass** sie außerdem einen Ionisator umfasst, der im Vergleich zu dem Luftstrom oberhalb des besagten Luftreinigers angeordnet ist.
